# EUROPÄISCHE PATENTSCHRIFT

(11) **EP 2 429 876 B1**
(45) Veröffentlichungstag und Bekanntmachung des Hinweises auf die Patenterteilung: **17.07.2013**
(21) Anmeldenummer: 10721275.5
(22) Anmeldetag: 05.05.2010
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 15.05.2009 DE 102009021579
(43) Veröffentlichungstag der Anmeldung: 21.03.2012
(73) Patentinhaber: ThyssenKrupp Presta Aktiengesellschaft, 9492 Eschen (LI)
(72) Erfinder: SCHLEGEL, Markus, CH-9475 Sevelen (CH); SEGATTO, Felipe, CH-7000 Chur (CH); MÜTZNER, Stefan, A-6800 Feldkirch (AT); JACQUES, Nicolas, CH-9658 Wildhaus (CH)
(74) Vertreter: Hofmann, Ralf U.
(86) Internationale Anmeldenummer: PCT/AT2010/000145
(87) Internationale Veröffentlichungsnummer: WO 2010/129973

(56) Entgegenhaltungen:
- EP-A2- 1 975 037
- JP-A- 10 217 981
- US-A- 5 497 675
- US-A1- 2006 290 128
- US-A1- 2008 272 583

## Beschreibung

Die Erfindung betrifft eine Lenksäule für ein Kraftfahrzeug, umfassend eine Manteleinheit, von der ein an ein lenkradseitiges Ende anschließender Abschnitt einer Lenkspindel drehbar gelagert ist, und mindestens ein Tragstück, welches einerseits an einem karosseriefesten Teil des Kraftfahrzeugs befestigbar ist und welches andererseits mit der Manteleinheit fest verbunden oder fest verbindbar ist, wobei zumindest ein Aufreißbereich ausgebildet ist, entlang dem bei Einwirken einer Verschiebekraft in Richtung der Längsachse des an das lenkradseitige Ende anschließenden Abschnitts der Lenkspindel, die eine vordefinierte Lösekraft überschreitet, die Verbindung des Tragstücks mit der Manteleinheit oder das Tragstück aufreißbar ist, wobei es zu einer Verschiebung der Manteleinheit gegenüber dem karosseriefesten Teil kommt und wobei das Aufreißen des Aufreißbereiches zumindest über einen Großteil des Verschiebeweges der Manteleinheit gegenüber dem karosseriefesten Teil kontinuierlich erfolgt.

Lenksäulen, die im Falle eines Fahrzeugcrashes unter Energieabsorption zusammenschiebbar sind, um das Verletzungsrisiko des Fahrers zu senken, sind in unterschiedlichen Ausführungsformen bekannt. Zur Anpassung an die Sitzposition bei unterschiedlichen Größen des Fahrers werden häufig in der Länge und/oder Neigung bzw. Höhe verstellbare Lenksäulen eingesetzt. Aus Kostengründen werden aber auch einfachere unverstellbare Lenksäulen eingesetzt, die ebenfalls im Crashfall unter Energieabsorption zusammenschiebbar sein sollen.

Aus der US 4,991,871 A geht beispielsweise eine nicht verstellbare Lenksäule hervor, bei der sowohl die Lenkspindel als auch eine die Lenkspindel drehbar lagernde Manteleinheit jeweils zwei gegeneinander teleskopierbare Abschnitte aufweisen. Im Crashfall wird der dem Fahrer nähere Abschnitt der Manteleinheit aus der fahrzeugfesten Halterung herausgerissen und unter Energieaufzehrung in den weiter vom Fahrer entfernten Abschnitt der Manteleinheit hineingedrückt. Eine derartige Ausbildung ist aufwendig und kostenintensiv.

Die DE 2 363 395 A1 offenbart ebenfalls eine nicht verstellbare Lenksäule, bei der im Crashfall die einen Abschnitt der Lenkspindel drehbar lagernde Manteleinheit aus einer fahrzeugfesten Halterung herausgerissen wird und gegen ein Deformationsglied, beispielsweise ein Wellrohr, gedrückt wird, wobei Energie absorbiert wird. Auf Grund des zusätzlich erforderlichen Energieabsorptionsteils ist auch diese Einrichtung relativ aufwendig.

Eine verstellbare Lenksäule mit einem Energieabsorptionsmechanismus für den Crashfall geht aus der JP 10217981 A hervor. Im geschlossenen Zustand einer Feststellrichtung ist eine die Lenkspindel drehbar lagernde Manteleinheit mit einer Halteeinheit fest verbunden. Die Halteeinheit umfasst ein erstes karosseriefestes Teil und ein zweites Teil, welches im geschlossenen Zustand der Feststelleinrichtung unverschiebbar gegenüber der Manteleinheit gehalten ist. Im Crashfall kann das zweite Teil der Halteeinheit sich vom ersten Teil trennen und in Richtung zur Fahrzeugfront zusammen mit der Manteleinheit verschieben. Zwischen dem ersten und dem zweiten Teil der Halteeinheit ist ein Energieabsorptionsteil angeordnet, welches durch Aufreißen entlang einer Aufreißlinie bei der Verschiebung der Manteleinheit in Richtung zur Fahrzeugfront Energie absorbiert.

In ähnlicher Weise ausgebildete Energieabsorptionsmechanismen gehen auch aus der EP 1 707 471 A1, EP 1 839 994 A2 und EP 1 975 037 A2 hervor. Jeweils ist zwischen zwei separaten Teilen der Halteeinrichtung, von denen eines karosseriefest ist und das andere unverschiebbar mit der Manteleinheit verbunden ist und die im Normalbetrieb miteinander verbunden sind und sich im Crashfall voneinander lösen können, ein separates Energieabsorptionsteil angeordnet.

In Hinblick auf die mehrteiligen Ausbildungen der Halteeinheiten und der separaten Energieabsorptionsteile sind diese Einrichtungen relativ aufwendig ausgebildet.

Aus der US 2008/0272583 A1 geht eine Lenksäule mit einem Tragstück hervor, durch dessen inneren Hohlraum sich die die Lenkspindel drehbar lagernde Manteleinheit erstreckt, wobei die Manteleinheit starr mit einem um ihre Unterseite verlaufenden Abschnitt des Tragstücks verbunden ist. Das Tragstück weist weiters einen zwischen einem Hauptteil des Tragstücks und der Oberseite der Manteleinheit verlaufenden Streifen auf, der mit einer Schwächung versehen ist. Bei einer Verschiebung der Manteleinheit im Crashfall reißt dieser Streifen bei der Schwächung ab.

Eine Lenksäule der eingangs genannten Art geht aus der US 2006/0290128 A1 hervor. Die Aufhängevorrichtung für die Lenksäule umfasst ein sowohl im Normalbetrieb als auch im Crashfall unverschiebbar mit dem Fahrzeugchassis verbundenes Teil sowie ein die Manteleinheit tragendes Teil, welches im Crashfall gegenüber diesem unverschiebbaren Teil verschiebbar ist. Das unverschiebbare Teil ist mit einem mit dem verschiebbaren Tragteil verbundenen Streifen ausgebildet, der bei der Verschiebung des verschiebbaren Tragteils aus dem unverschiebbaren Teil fortlaufend herausreißbar ist, wobei Energie absorbiert wird.

Aufgabe der Erfindung ist es eine einfach ausgebildete Lenksäule der eingangs genannten Art mit einem Energieabsorptionsmechanismus für den Crashfall bereitzustellen. Erfindungsgemäß gelingt dies durch eine Lenksäule mit den Merkmalen des Anspruchs 1. In den Unteransprüchen sind vorteilhafte Weiterbildungen der Erfindung dargestellt.

Bei einer erfindungsgemäßen Lenksäule ist somit mindestens ein Tragstück vorgesehen, welches im montierten Zustand der Lenksäule einerseits an einem karosseriefesten Teil des Kraftfahrzeuges befestigt ist andererseits mit der Manteleinheit - im Falle der Ausbildung als unverstellbare Lenksäule - fest verbunden oder - im Falle der Ausbildung als verstellbare Lenksäule - fest verbindbar ist, wobei zumindest ein Aufreißbereich ausgebildet ist, entlang dem im Falle der Einwirkung einer parallel zur Lenkspindel ausgerichteten Verschiebekraft, die eine vordefinierten Lösekraft überschreitet, wie sie bei einem Fahrzeugcrash auftreten kann, die Verbindung des Tragstücks mit der Manteleinheit oder das Tragstück aufreißbar ist, wobei es zu einer Verschiebung der Manteleinheit gegenüber dem karosseriefesten Teil kommt, an dem das Tragstück angebracht ist.

Ohne ein Einwirken einer Verschiebekraft in Richtung der Längsachse des an das lenkradseitige Ende anschließenden Abschnitts der Lenkspindel, welche die vordefinierte Lösekraft überschreitet (also im Normalbetrieb, wenn kein Crashfall aufgetreten ist), liegt der Aufreißbereich unmittelbar im Kraftfluss zwischen dem karosseriefesten Teil des Kraftfahrzeugs und der Manteleinheit zur Aufnahme der Haltekräfte der Manteleinheit.

Im Crashfall, wenn die parallel zur Lenksäule ausgerichtete Verschiebekraft die vordefinierte Lösekraft überschreitet, erfolgt das Aufreißen des Aufreißbereichs zumindest über einen Großteil des Verschiebeweges der Manteleinheit gegenüber dem karosseriefesten Teil kontinuierlich.

Vorzugsweise ist dieser Aufreißbereich im Tragstück selbst ausgebildet. Hierbei kann der Aufreißbereich insbesondere als im Tragstück ausgebildete Aufreißlinie ausgebildet sein, entlang der das Tragstück im Falle der Einwirkung der Verschiebekraft, die die vordefinierte Lösekraft überschreitet, aufreißbar ist. In einer alternativen Ausführungsform kann der Aufreißbereich als auftrennbare Befestigung zur Befestigung der Manteleinheit am Tragstück ausgebildet sein. Beide Maßnahmen (mindestens eine Aufreißlinie im Tragstück bzw. auftrennbare Befestigung des Tragstücks an der Manteleinheit) können auch kombiniert miteinander angewendet werden.

Mindestens ein Tragstück, das zur Befestigung der Lenksäule an einem karosseriefesten Teil des Kraftfahrzeuges dient, wird dadurch direkt als Energieabsorptionsteil herangezogen und ermöglicht beim Aufreißen auch eine Verschiebung der Manteleinheit der Lenksäule in Richtung zur Fahrzeugfront. Es kann somit in der erfindungsgemäßen Weise sehr einfach eine Nachgiebigkeit der Lenksäule unter Energieabsorption dargestellt werden. Die Energieabsorption erfolgt dabei durch das Aufreißen (=Trennenergie). Vorzugsweise kann weiters eine Energieabsorption durch eine Verformung (Biegung) des Tragstücks erfolgen.

Die im Crashfall durch den Aufprall des Fahrers erfolgende Verschiebung der Manteleinheit in Richtung zur Fahrzeugfront ist hierbei vorzugsweise im Wesentlichen parallel (vorzugsweise mit einer Abweichung von weniger als 20° zur Parallelen) zur Längsachse des von der Manteleinheit drehbar gelagerten Abschnitts der Lenkspindel ausgerichtet.

Bei Darstellung des Aufreißbereichs durch eine Aufreißlinie, ist im Bereich der mindestens einen Aufreißlinie das Material des Tragstücks geschwächt, sodass bei einer ausreichend hohen im Sinne eines Aufreißens wirkenden Kraft (=einer vordefinierten Lösekraft), ein definiertes Aufreißen entlang der Schwächungslinie erfolgt. Vorteilhafterweise kann die Aufreißlinie von einer linienförmigen Einkerbung gebildet werden, welche bei der Herstellung des Tragstücks günstigerweise durch Einstanzen ausgebildet werden kann. Vorzugsweise wird das Tragstück als Blechbiegeteil oder als Blechbiege-Stanzteil ausgebildet, wodurch eine kostengünstige Herstellung ermöglicht wird.

Analog wird bei Darstellung des Aufreißbereichs durch eine auftrennbare Befestigung die Befestigung so dimensioniert, dass sich die Befestigung bei Auftreten einer vordefinierten Lösekraft auftrennt. Mit Vorteil werden auch hier entsprechende Schwächungen oder Einkerbungen vorgesehen, um ein kontrolliertes Ausknöpfen (=Aufreißen einer punktförmigen Verbindung, beispielsweise Punktschweißverbindung) oder Auftrennen zu erreichen. Dabei können alle bekannten Befestigungsverfahren verwendet werden. Vorzugsweise erfolgt die Befestigung durch Punktschweißen oder Nieten.

Ein Crashfall liegt vor, wenn auf das lenkradseitige Ende der Lenkspindel in axialer Richtung der Lenkspindel eine Kraft oder eine Kraftkomponente einwirkt, die einen vorgegebenen Grenzwert überschreitet. Dieser Grenzwert stellt die vordefinierte Lösekraft dar, ab der es zu einem Aufreißen des Aufreißbereichs kommt. Die vordefinierte Lösekraft liegt vorzugsweise bei mindestens 500N.

Es ist bevorzugt, dass die vordefinierte Lösekraft bei maximal 10000N, besonders bevorzugt bei maximal 5000N, noch bevorzugter bei maximal 3000N liegt.

Wenn im Rahmen dieser Schrift davon die Rede ist, dass das Tragstück mit der Manteleinheit "fest verbunden" oder "fest verbindbar" ist, so bedeutet dies, dass die Verbindung des entsprechenden Abschnitts des Tragstücks mit der Manteleinheit zumindest im Normalbetrieb, also wenn kein Crash auftritt, keine Verschiebung der Manteleinheit gegenüber dem Tragstück zulässt. Vorzugsweise bleibt diese unverschiebbare Verbindung auch im Crashfall bestehen, vorzugsweise zumindest bis zu einer vordefinierten Losbrechkraft, deren Wert größer als die Lösekraft ist, bevorzugt mindestens den doppelten Wert der Lösekraft besitzt.

Das Gleiche gilt für die Befestigung des Tragstücks am karosseriefesten Teil des Kraftfahrzeuges.

Eine Verschiebung der Manteleinheit im Crashfall in Richtung zur Fahrzeugfront wird somit also durch das Aufreißen entlang der mindestens einen Aufreißlinie und/oder der Befestigung und der damit verbundenen Verschiebung von Teilen des Tragstücks ermöglicht. Zusätzlich kann eine weitere Verschiebung beispielsweise durch Verbiegung von Teilen des Tragstücks gegeneinander ermöglicht sein.

Mit Vorzug bleibt jedoch auch nach der Auftrennung des Aufreißbereichs, zumindest für den Fall, dass die einwirkende Kraft die zweite Losbrechkraft unterschreitet, eine Verbindung zwischen der Manteleinheit unter Zwischenschaltung des Tragstücks mit dem karosseriefesten Teil bestehen. Das heißt, dass das Tragstück noch eine Verbindung mit der Manteleinheit besitzt und noch eine Verbindung mit dem karosseriefesten Teil besitzt und in sich nicht völlig in zwei Teile zertrennt ist.

In einer vorteilhaften Ausführungsform der Erfindung umfasst das mindestens eine der zumindest einen Aufreißbereich aufweisende Tragstück mindestens einen ersten Befestigungsabschnitt, der im montierten Zustand der Lenksäule am karosseriefesten Teil befestigt ist, wobei er vorzugsweise am karosseriefesten Teil anliegt, und mindestens einen zweiten Befestigungsabschnitt, der - im Falle einer unverstellbaren Lenksäule - an der Manteleinheit festgelegt ist, vorzugsweise direkt (also nicht über ein separates Teil), oder - im Falle der Ausbildung einer verstellbaren Lenksäule - mit der Manteleinheit durch Schließen einer Feststelleinrichtung fest verbindbar ist, wobei er vorzugsweise an der Manteleinheit anliegt. Besonders bevorzugt ist diese Ausbildung im Falle, dass der Aufreißbereich durch eine Aufreißlinie gebildet ist.

Eine mögliche Ausführungsform sieht vor, dass beidseitig an der Manteleinheit (auf gegenüberliegenden Seiten bezogen auf eine Vertikalebene, in der die Achse der Lenkspindel liegt) jeweils ein, vorzugsweise einstückig ausgebildetes (also nicht aus mehreren separaten, miteinander verbundenen Teilen bestehendes), Befestigungsstück festgelegt ist, z.B. durch Schweißen, welches jeweils zumindest eine Aufreißlinie aufweist.

In einer anderen Ausführungsform der Erfindung kann ein, vorzugsweise einstückig ausgebildetes, Tragstück (= Befestigungsstück) vorgesehen sein, welches auf zwei gegenüberliegenden Seiten der Manteleinheit (bezogen auf eine Vertikalebene, in der die Längsachse der Lenkspindel liegt, wobei dies natürlich auf die Betriebsstellung der Lenksäule bezogen ist) sich erstreckende Abschnitte aufweist, die jeweils an der Manteleinheit angebracht sind und jeweils mit mindestens einer Aufreißlinie versehen sind.

In einem gegenüber dem mindestens einen Tragstück weiter vom lenkradseitigen Ende der Lenkspindel entfernten Bereich der Lenksäule ist günstigerweise mindestens ein weiteres Tragstück vorgesehen, welches einerseits im montierten Zustand der Lenksäule an einem karosseriefesten Teil des Kraftfahrzeuges befestigt ist, andererseits an einem Teil der Lenksäule, vorzugsweise der Manteleinheit, befestigt ist. Die Befestigung an der Lenksäule kann beispielsweise auch an einem axial unverschiebbar aber drehbar auf der Lenkspindel angeordneten, von der Manteleinheit separierten Teil erfolgen. Günstigerweise kann sich dieses mindestens eine weitere Tragstück im Crashfall, wenn eine Verschiebung der Manteleinheit in Richtung zur Fahrzeugfront auftritt, verformen. Diese Verformung kann auch zur Energieabsorption beitragen.

In einer vorteilhaften Ausführungsform ist das mindestens eine weitere Tragstück über mindestens zwei Befestigungsstellen mit dem Teil der Lenksäule, vorzugsweise der Manteleinheit, verbunden, wobei sich mindestens eine dieser Befestigungsstellen so ausgebildet ist, dass sie sich im Crashfall lösen kann, und mindestens eine dieser Befestigungsstellen so ausgebildet ist, dass sie auch im Crashfall die Verbindung hält. Dadurch kann einerseits eine erhöhte Stabilität für den Normalbetrieb, andererseits eine ausreichend große und leichte Verformbarkeit im Crashfall bereitgestellt werden, wobei auch eine Führung der Bewegung der Manteleinheit im Crashfall erreicht werden kann.

Eine mögliche Ausführungsform der Erfindung sieht vor, dass die Lenksäule in ihrer Länge und/oder Neigung verstellbar ausgebildet ist, wobei im geschlossenen Zustand einer Feststelleinrichtung die Manteleinheit unverstellbar gegenüber mindestens einem Tragstück gehalten ist und im geöffneten Zustand der Feststelleinrichtung gegenüber diesem Tragstück verstellbar ist.

Vorzugsweise ist hierbei vorgesehen, dass die Feststelleinrichtung einen Spannbolzen umfasst, mittels dem im geschlossenen Zustand der Feststelleinrichtung mindestens ein Tragstück an die Manteleinheit angedrückt wird, wobei eine reibschlüssige und/oder formschlüssige Feststellung der Manteleinheit gegenüber dem Tragstück erreicht wird.

Weitere Vorteile und Einzelheiten der Erfindung werden im Folgenden anhand der beiliegenden Zeichnung erläutert. In dieser zeigen:
Fig. 1 eine Ausführungsform einer Lenksäule gemäß der Erfindung in Schrägsicht;
Fig. 2 die Lenksäule von Fig. 1 in Seitenansicht;
Fig. 3 einen Abschnitt der Lenksäule in einer Ansicht von unten (Blickrichtung A in Fig. 2);
Fig. 4 eine Schrägsicht des oberen Tragstücks;
Fig. 5 und Fig. 6 den Vergleich der Lenksäule vor und nach einem Fahrzeugcrash (jeweils in Seitenansicht);
Fig. 7 eine Schrägsicht eines Tragstücks einer Lenksäule gemäß einer zweiten Ausführungsform;
Fig. 8 und Fig. 9 schematische Darstellungen von verschiedenen Verstellpositionen der Lenksäule in Richtung der Längenverstellung, in Seitenansicht der Lenksäule;
Fig. 10 eine schematische Darstellung entsprechend Fig. 8 nach einem Fahrzeugcrash;
Fig. 11 eine Schrägsicht eines Tragstücks einer Lenksäule gemäß einer dritten Ausführungsform;
Fig. 12 und Fig. 13 schematische Seitenansichten der Lenksäule in unterschiedlichen Verstellpositionen bezogen auf die Richtung der Höhenverstellung;
Fig. 14 und Fig. 15 zwei leicht modifizierte Ausführungsbeispiele von Befestigungen der Manteleinheit über ein weiteres Tragstück, in Schrägsicht;
Fig. 16 einen Abschnitt der Lenksäule in einer Ansicht von unten (entsprechend Blickrichtung A in Fig. 2) mit einem Tragstück in einer alternativen Ausführungsform;
Fig. 17 eine Schrägsicht eines Tragstücks einer Lenksäule einer alternativen Ausführungsform für ein Tragstück entsprechend Fig. 16.

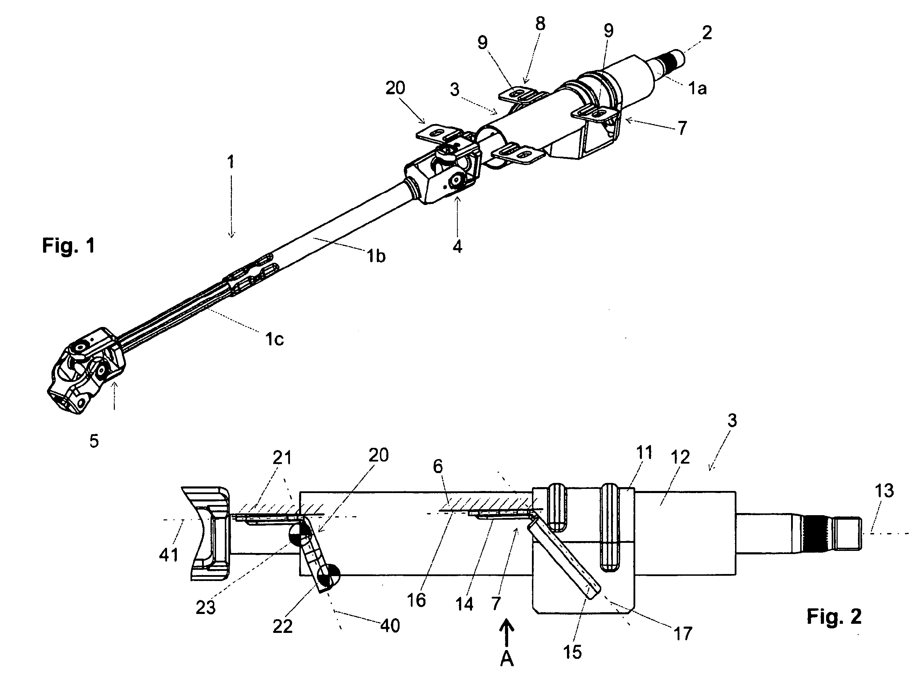

Ein erstes Ausführungsbeispiel einer Lenksäule gemäß der Erfindung ist in den Fig. 1 bis 6 schematisch dargestellt. Die Lenksäule weist eine Lenkspindel 1 auf, von der ein an ein lenkradseitiges Ende anschließender, eine Längsachse 13 aufweisender Abschnitt 1a von einer Manteleinheit 3, die auch als Mantelrohr bezeichnet werden kann, drehbar gelagert ist. Um eine Verschiebung des an das lenkradseitige Ende anschließenden Abschnitts 1a der Lenkspindel 1 gegenüber den karosseriefesten Teilen (karosserieseitigen Befestigungsteilen) 6, 21 im Crashfall zu ermöglichen, umfasst die Lenkspindel, 1 zwei gegeneinander teleskopierbare Abschnitte. Es könnte sich hierbei um den an das lenkradseitige Ende 2 anschließende Abschnitt 1a und einen gegenüber diesem teleskopierbaren Abschnitt handeln. Im gezeigten Ausführungsbeispiel ist die Teleskopierbarkeit zwischen zwei anderen Abschnitten 1b, 1c der Lenkspindel verwirklicht, von denen der näher beim lenkradseitigen Ende liegende Abschnitt 1 b mit dem Abschnitt 1 a über ein Kardangelenk 4 verbunden ist. Die Verschiebbarkeit kann jedoch auch durch alternative Maßnahmen ermöglicht sein, beispielsweise durch eine hier nicht gezeigte Verformung der Lenkspindel oder durch hier nicht gezeigte Winkelversätze in der Lenkwelle über mehrere Gelenkverbindungen hinweg.

Ein weiterer Abschnitt der Lenksäule, der mit dem Abschnitt 1c über ein weiteres Kardangelenk 5 verbunden ist ist der Einfachheit halber nicht dargestellt.

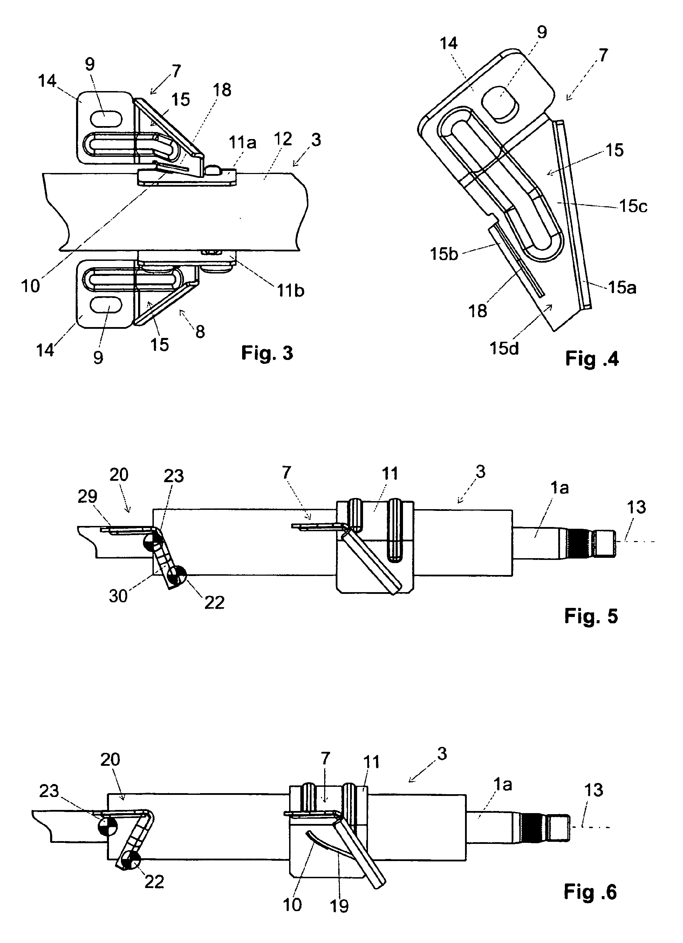

Zur Halterung der Lenksäule an einem karosseriefesten Teil 6 des Kraftfahrzeuges, das nur in Fig. 2 angedeutet ist, dienen die Tragstücke 7, 8. Von diesen wird im Normalbetrieb, also wenn kein Crashfall aufgetreten ist, zumindest ein Teil des Gewichts der Lenksäule getragen. Diese Tragstücke 7, 8 sind jeweils einerseits am karosseriefesten Teil 6 befestigt. Zu diesem Zweck weisen sie eine Bohrung 9 zur Aufnahme einer Befestigungsschraube auf (nicht dargestellt in den Figuren), über die die Befestigung am karosseriefesten Teil 6 erfolgt. Andererseits ist bei dem in den Fig. 1 bis 6 dargestellten Ausführungsbeispiel einer unverstellbaren Lenksäule jedes der Tragstücke 7, 8 unmittelbar mit der Manteleinheit 3 fest verbunden. Diese Verbindung kann beispielsweise durch eine in den Fig. 3 und 6 angedeutete Schweißnaht 10 erfolgen. Andere feste Verbindungen zwischen der Manteleinheit 3 und dem Tragstück 7, 8, beispielsweise über Vernietungen, Verschraubungen, sind denkbar und möglich.

Zur Verbindung mit dem jeweiligen Tragstück 7, 8 weist die Manteleinheit 3 einen Verbindungsbügel 11 auf, der an einem Rohrteil 12 der Manteleinheit festgelegt, beispielsweise angeschweißt ist. Der Verbindungsbügel 11 weist auf gegenüberliegenden Seiten der Manteleinheit 3 (bezogen auf eine - bezogen auf die Betriebsstellung der Lenksäule - vertikale, die Längsachse 13 des Abschnitts 1a der Lenkspindel 1 enthaltende Ebene) liegende Seitenwangen 11 a, 11 b auf, an denen das jeweilige Tragstück 7, 8 befestigt ist.

Andere Ausbildungen der Manteleinheit 3 sind denkbar und möglich. Beispielsweise könnte die Manteleinheit 3 auch kastenförmig ausgebildet sein, wobei die Tragstücke 7, 8 an gegenüberliegenden, vertikal stehenden Seiten dieses kastenförmigen Profils angebracht sein können. Auch eine nicht geschlossene Ausbildung der Manteleinheit 3 ist denkbar und möglich, beispielsweise könnte die Manteleinheit 3 im Querschnitt U-förmig mit einer nach unten offenen Seite ausgebildet sein.

Die Befestigung des jeweiligen Tragstücks 7, 8 am karosseriefesten Teil 6 erfolgt an einem ersten Befestigungsabschnitt 14 des Tragstücks 7, 8, der die Bohrung 9 aufweist. Die feste Verbindung mit der Manteleinheit 3 erfolgt an einem Anbindungsabschnitt 15b des zweiten Befestigungsabschnitts 15 des Tragstücks 7, 8. Der erste und der zweite Befestigungsabschnitt 14, 15 weisen jeweils eine Hauptebene 16, 17 auf, wobei diese Hauptebenen 16, 17 winkelig zueinander stehen. Der Winkel, den die Hauptebenen 16, 17 miteinander einschließen, kann beispielsweise im Bereich von 110° bis 150° liegen. Im gezeigten Ausführungsbeispiel liegt er bei ca. 130°. Auch eine Ausbildung dieses Winkels im Bereich von 90° (+/- 20°) ist denkbar und möglich. Neben dem Anbindungsabschnitt 15b weist der zweite Befestigungsabschnitt 15 noch einen Basisabschnitt 15c und einen Verbindungsabschnitt 15d auf, die mit Vorzug alle dieselbe Hauptebene aufweisen.

In diesem Ausführungsbeispiel stehen sowohl die Hauptebene 16 als auch die Hauptebene 17 rechtwinkelig zu einer Vertikalebene, die die Längsachse 13 enthält.

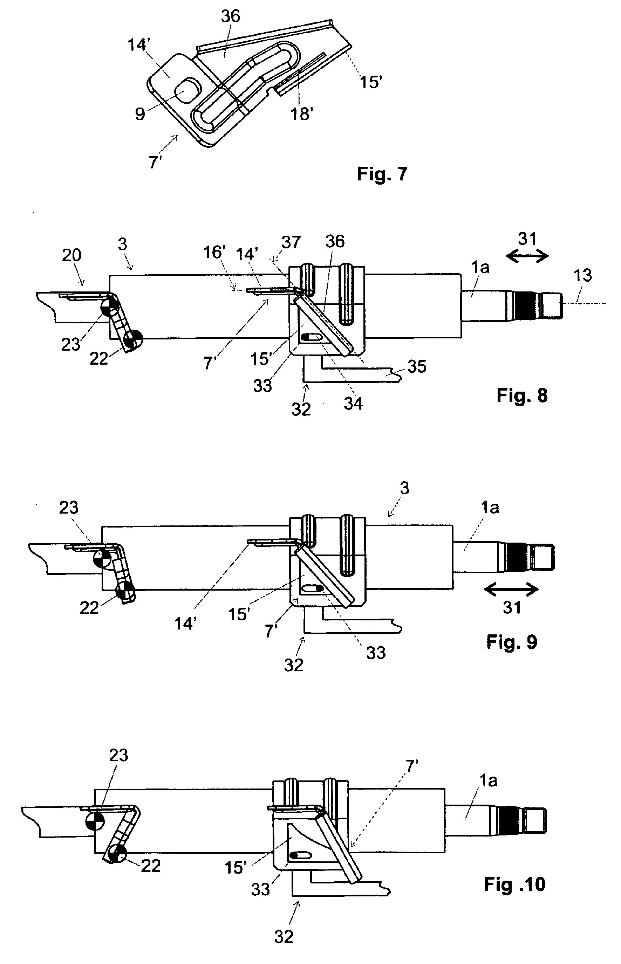

Der zweite Befestigungsabschnitt 15 des jeweiligen Tragstücks 7, 8 weist eine Aufreißlinie 18, auf, die hier von einer Einkerbung ausgebildet ist. Im Crashfall, wenn auf das lenkradseitige Ende 2 der Lenkspindel 1 eine parallel zur Längsachse 13 gerichtete und zur Fahrzeugfront weisende Kraft oder zumindest eine solche Kraftkomponente einwirkt, die einen vorgegebenen Grenzwert (die vordefinierte Lösekraft) überschreitet, reißt das jeweilige Tragstück 7, 8 entlang der Aufreißlinie 18 bei gleichzeitiger Verschiebung der Manteleinheit 3 in Richtung zur Fahrzeugfront auf, wobei sich eine herausgerissene Zunge 19 bildet, vgl. Fig. 6. Die Befestigung an der Manteleinheit 3 erfolgt im Bereich des freien Endes dieser Zunge. Das andere Ende der Zunge 19, das nicht mit der Manteleinheit 3 verbunden ist, ist mit dem Tragstück 7, 8 verbunden. Ein Teil der Zunge 19, der an den mit dem restlichen Teil des Tragstücks 7, 8 anschließt, ist nicht mit der Manteleinheit 3 verbunden. Auf diese Weise bleibt die Manteleinheit 3 über das Tragstück 7, 8 mit dem karosseriefesten Teil 6 verbunden, obgleich eine Verschiebung der Manteleinheit 3 gegenüber dem karosseriefesten Teil 6 erfolgt ist. Bei der Verschiebung der Manteleinheit 3 in Richtung zur Fahrzeugfront verschiebt sich die Manteleinheit 3 auch gegenüber dem (am karosseriefesten Teil 6 festgelegten) ersten Befestigungsabschnitt 14 des jeweiligen Tragstücks 7. Beim Aufreißen entlang der Aufreißlinie 18 wird Energie durch die aufzubringende Zerspanungsarbeit absorbiert. Vorzugsweise ist es vorgesehen, dass das bei der Verschiebung der Manteleinheit 3 gegenüber dem karosseriefesten Teil 6 auch eine Biegeumformung zwischen den ersten und zweiten Befestigungsabschnitten 14, 14', 15, 15', 29, 30 der Tragstücke 7, 7', 7", 8, 20 erfolgt, durch die zusätzlich Energie absorbiert wird. Dies ist in den Figuren 6 und 10 veranschaulicht.

Die Aufreißlinie 18 geht im Ausführungsbeispiel von einem Rand, beispielsweise im Bereich einer Abstufung des zweiten Befestigungsabschnitts 15 in der Breite, des zweiten Befestigungsabschnitts 15 aus und erstreckt sich in Richtung zum vom ersten Befestigungsabschnitt 14 entfernt gelegenen Ende des zweiten Befestigungsabschnitts 15. Beispielsweise liegt die Aufreißlinie 18 wie dargestellt in einer parallel zur Längsachse 13 liegenden vertikalen Ebene (bezogen auf die Betriebsstellung der Lenksäule), wobei sie insbesondere rechtwinkelig zur Umbiegung bzw. Abwinkelung verlaufen kann, über die der zweite Befestigungsabschnitt 15 mit dem ersten Befestigungsabschnitt 14 verbunden ist. Die Aufreißlinie bildet damit die Unterteilung des Befestigungsabschnitts 15 in den Anbindungsabschnitt 15b vom Basisbereich 15c. Mit Vorzug ist die Aufreißlinie 18 in ihrer Länge derart begrenzt, dass ein Verbindungsbereich 15d zwischen dem Anbindungsabschnitt 15b und dem Basisbereich 15c des Befestigungsabschnitts 15 gebildet ist.

Die Befestigung an der Manteleinheit 3 erfolgt in diesem Ausführungsbeispiel im Verbindungsbereich 15d, insbesondere im Bereich des der Manteleinheit 3 zugewandten Seitenrandes des zweiten Befestigungsabschnitts 15.

Zur Erhöhung der Stabilität kann der Befestigungsabschnitt 15 eine Umbördelung 15a aufweisen, vgl. beispielsweise Fig. 4.

Die Tragstücke 7, 8 liegen auf gegenüberliegenden Seiten (bezogen auf eine die Längsachse 13 enthaltende Vertikalebene) der Manteleinheit 3 und zwar im gleichen Bereich der Längserstreckung der Lenksäule, es ist also mindestens eine rechtwinkelig zum Abschnitt 1a der Lenkspindel 1 stehende Ebene vorhanden, welche beide Tragstücke 7, 8 durchsetzt. Vorzugsweise sind die beiden Tragstücke 7, 8 spiegelsymmetrisch ausgebildet.

In einem gegenüber den Tragstücken 7, 8 weiter vom lenkradseitigen Ende 2 entfernt liegenden Bereich der Lenksäule ist ein weiteres Tragstück 20 vorhanden. Dieses ist einerseits an einem karosseriefesten Teil 21 befestigt, das nur in Fig. 2 angedeutet ist, andererseits an der Manteleinheit 3 befestigt. Die Befestigung an der Manteleinheit 3 erfolgt über in den Fig. 2, 5 und 6 nur schematisch dargestellte erste und zweite Befestigungsstellen 22, 23, von denen die mindestens eine erste Befestigungsstelle 23 im Crashfall lösbar ist (vgl. Fig. 6). Zur Befestigung am karosseriefesten Teil 21 dienen Bohrungen 24, 25 in beidseitig des Mantelrohrs liegenden Abschnitten des weiteren Tragstücks 20, durch welche Befestigungsschrauben durchführbar sind (nicht dargestellt in den Figuren).

Das weitere Tragstück 20 weist somit (bezogen auf eine die Längsachse 13 durchsetzende Vertikalebene) beidseitig der Manteleinheit 3 liegende Abschnitte auf. Stattdessen könnte auf jeder Seite der Manteleinheit 3 ein separates weiteres Tragstück 20 vorgesehen sein, welches jeweils am karosseriefesten Teil 21 und an der Manteleinheit 3 befestigbar ist (beispielsweise jeweils über zwei Befestigungsstellen 22, 23.

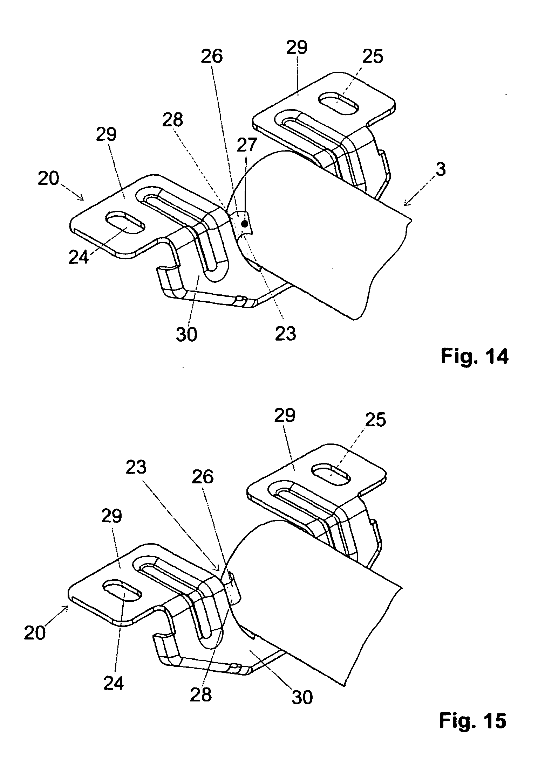

Eine mögliche Ausbildung der ersten Befestigungsstellen 23 geht genauer aus den Fig. 14 und 15 hervor. Wie aus Fig. 14 ersichtlich, besitzen die beidseitig der Manteleinheit 3 liegenden Abschnitte des Zusatztragstücks 20 jeweils eine Verbindungslasche 26, die an der Manteleinheit 3 befestigt ist, beispielsweise über eine Verschweißung (ein Schweißpunkt 27 ist in Fig. 14 ersichtlich). Die Verbindungslasche 26 ist mit einer punktiert eingezeichneten Aufreißlinie 28 versehen, entlang von der das Material der Verbindungslasche 26 geschwächt ist, beispielsweise durch eine Einkerbung.

Wenn im Crashfall auf das lenkradseitige Ende 2 der Lenkspindel 1 eine zur Fahrzeugfront gerichtete Kraft einwirkt, die einen vorgegebenen Grenzwert (die Lösekraft) überschreitet, so kommt es zu einem Abreißen der Verbindungslasche 26, bevorzugt entlang der Aufreißlinie 28 (neben dem Aufreißen der Tragstücke 7, 8). Alternativ kann jedoch auch der Schweißpunkt 27, oder die entsprechend vorgesehene Befestigung, so dimensioniert sein, dass er oder sie nach Überschreiten eines vorgegebenen Grenzwertes für die Verschiebekraft aufgetrennt wird.

Der Unterschied zwischen den Fig. 14 und 15 besteht lediglich darin, dass die Verbindungslaschen 26 in Fig. 14 zum lenkradseitigen Ende 2 und in Fig. 15 zur Fahrzeugfront gerichtet sind.

Die mindestens eine zweite Befestigungsstelle 22 des weiteren Tragstücks 20 an der Manteleinheit 3 ist in den Fig. 14 und 15 nicht sichtbar. Sie befindet sich im Bereich der Unterseite der Manteleinheit 3. Die Manteleinheit 3 kann hier am weiteren Tragstück 20 beispielsweise angeschweißt sein.

Die Verbindung des weiteren Tragstücks 20 mit der Manteleinheit 3 über die mindestens eine zweiten Befestigungsstelle 22 bleibt im Crashfall bestehen, wie in Fig. 6 und für das zweite Ausführungsbeispiel in Fig. 10 veranschaulicht ist. Die Verschiebung der Manteleinheit 3 in Richtung zur Fahrzeugfront wird durch eine Verformung des weiteren Tragstücks 20 ermöglicht. Das weitere Tragstück 20 umfasst erste Befestigungsabschnitte 29, die beidseitig (bezogen auf eine vertikale Ebene, in der die Längsachse 13 liegt) der Manteleinheit 3 liegen und über die die Befestigung am karosseriefesten Teil 21 erfolgt. Die ersten Befestigungsabschnitte weisen hierzu im gezeigten Ausführungsbeispiel die Bohrungen 24, 25 auf. Über Umbiegungen oder Abwinklungen sind die ersten Befestigungsabschnitte 29 mit einem zweiten Befestigungsabschnitt 30 verbunden. Die Hauptebene 40 des zweiten Befestigungsabschnitts 30 liegt winkelig zur Hauptebene 41 der ersten Befestigungsabschnitte 29. Beispielsweise kann dieser Winkel im Bereich von 80° bis 160° liegen. In einem von den Umbiegungen zwischen den ersten Befestigungsabschnitten 29 und dem zweiten Befestigungsabschnitt 30 entfernt liegenden Bereich des zweiten Befestigungsabschnitts befindet sich die mindestens eine zweite Befestigungsstelle 22, über die die Manteleinheit 3 am weitere Tragstück 20 befestigt ist und die auch im Crashfall bestehen bleibt, vorzugsweise zumindest bis zu einer in Richtung der Längsachse 13 einwirkenden Kraft, die eine vordefinierten zweite Losbrechkraft überschreitet. Die zweite Losbrechkraft ist mit Vorzug mindestens doppelt so groß wie die Kraft, bei der sich die mindestens eine erste Befestigungsstelle 23 löst.

Wenn sich die Manteleinheit 3 im Crashfall in Richtung zur Fahrzeugfront verschiebt, so wird hierbei der Winkel zwischen den ersten Befestigungsabschnitten 29 und dem zweiten Befestigungsabschnitt 30 verringert, vgl. Fig. 6 und für das zweite Ausführungsbeispiel vgl. Fig. 10.

Es könnten auch zwei getrennte weitere Tragstücke 20 vorgesehen sein, die beidseitig der Längsachse 13 angeordnet sind und die jeweils einen ersten Befestigungsabschnitt 29 zur Befestigung am karosseriefesten Teil 21 und einen zweiten Befestigungsabschnitt 30 zur Befestigung an der Manteleinheit 3 aufweisen. Die mindestens eine zweite Befestigungsstelle 22 würde analog im Bereich des zweiten Befestigungsabschnitts 30 (in einem von der Umbiegung bzw. Abwinklung entfernt gelegenen Bereich) liegen.

Sowohl in der einstückigen als auch in der mehrteiligen Ausbildung kann die mindestens eine erste Befestigungsstelle 23 sowohl im Bereich des jeweiligen ersten Befestigungsabschnitts 29 oder im Bereich des (jeweiligen) zweiten Befestigungsabschnitts 30 liegen.

Der zweite Befestigungsabschnitt 15 des jeweiligen Tragstücks 7, 8 weist günstigerweise wie dargestellt an seinem der Manteleinheit 3 gegenüberliegenden Rand eine Umbördelung 15a auf.

Ein zweites Ausführungsbeispiel der Erfindung ist in den Fig. 7 bis 10 schematisch dargestellt. Die Ausbildung entspricht dem zuvor beschriebenen Ausführungsbeispiel mit folgenden Unterschieden:

Die Lenksäule ist in diesem Ausführungsbeispiel in der Längsrichtung 31 (in Richtung der Längsachse 13) verstellbar ausgebildet. Zur Feststellung der eingestellten Position der Lenksäule ist eine öffen- und schließbare Feststelleinrichtung 32 vorgesehen, die nur stark schematisiert und nur teilweise dargestellt ist. Im geöffneten Zustand der Feststelleinrichtung 32 kann die Manteleinheit 3 gegenüber den - bezogen auf eine durch die Längsachse 13 verlaufende Vertikalebene - beidseitig der Manteleinheit 3 angeordneten Tragstücken 7' (in den Fig. 7 bis 10 ist nur das auf der einen Seite angeordnete Tragstück 7' dargestellt, das auf der anderen Seite angeordnete Tragstück ist spiegelsymmetrisch ausgebildet) in die Längsrichtung 31 verstellt werden. Im geschlossenen Zustand der Feststelleinrichtung 32 ist die Manteleinheit 3 unverstellbar gegenüber den Tragstücken 7' gehalten. Die Tragstücke 7' sind somit im geschlossenen Zustand der Feststelleinrichtung 32 fest mit der Manteleinheit 3 verbunden, also zumindest im Normalbetrieb nicht in Richtung der Längsachse 13 verschiebbar. Vorzugsweise bleibt diese in Richtung der Längsachse 13 unverschiebbare Verbindung auch im Crashfall bestehen, zumindest bis zu einem vorgegebenen oberen Grenzwert der auf das lenkradseitige Ende 2 in Richtung zur Fahrzeugfront einwirkenden Kraft.

Die Feststelleinrichtung 32 umfasst einen Spannbolzen 33, der sich quer zur Längsachse 13 erstreckt und mindestens ein Loch in der Manteleinheit 3 durchsetzt, von dessen Rändern er in die Längsrichtung 31 unverstellbar gehalten ist, sowie in die Längsrichtung 31 sich erstreckende Langlöcher 34 in den Tragstücken 7' durchsetzt.

Die Tragstücke 7' weisen wiederum einen ersten Befestigungsabschnitt 14' auf, der zur Befestigung des jeweiligen Tragstücks 7' am karosseriefesten Teil dient. Die ersten Befestigungsabschnitte 14' können identisch wie die ersten Befestigungsabschnitte 14 im ersten Ausführungsbeispiel ausgebildet sein.

Zur festen Verbindung des Tragstücks 7' mit der Manteleinheit 3 im geschlossenen Zustand der Feststelleinrichtung 32 dient ein zweiter Befestigungsabschnitt 15' des jeweiligen Tragstücks 7'. Im geschlossenen Zustand der Feststelleinrichtung 32 wird dieser zweite Befestigungsabschnitt 15' an die jeweilige Seitenwange 11a, 11b des Verbindungsbügels 11 angedrückt. Es kann dadurch eine reibschlüssige und/oder formschlüssige Feststellung der Manteleinheit 3 gegenüber den Tragstücken 7' erreicht werden.

Das Andrücken des zweiten Befestigungsabschnitts 15' durch die Feststelleinrichtung 32 kann in herkömmlicher Weise erfolgen, beispielsweise durch eine durch Drehung des Spannbolzens 33 um seine Längsachse mittels des Betätigungshebels 35 gedrehte Nockenscheibe, die mit einer Nockenfolgerscheibe zusammenwirkt. Diese Elemente sind in den Figuren der Einfachheit halber nicht dargestellt. In Form von Spannmechanismen ausgebildete Feststelleinrichtungen 32 sind in vielen unterschiedlichen Ausführungen bekannt.

Die Hauptebene des zweiten Befestigungsabschnitts 15' liegt hier in einer parallel zur Längsachse 13 liegenden Vertikalebene (bezogen auf die Betriebsstellung der Lenksäule).

Der zweite Befestigungsabschnitt 15' ist mit dem ersten Befestigungsabschnitt 14' über einen Verbindungsabschnitt 36 verbunden. Dieser Verbindungsabschnitt 36 kann beispielsweise völlig identisch mit dem im ersten Ausführungsbeispiel beschriebenen zweiten Befestigungsabschnitt 15 ausgebildet sein, nur dass er eben an seinem der Manteleinheit 3 zugewandten Seitenrand nicht direkt an der Manteleinheit 3 befestigt ist sondern mit dem zweiten Befestigungsabschnitt 15' über eine Umbiegung oder Abwinkelung verbunden ist.

Die Hauptebene 16' des ersten Befestigungsabschnitts 14 und die Hauptebene 37 des Verbindungsabschnitts 36 schließen somit einen Winkel miteinander ein, wie er im ersten Ausführungsbeispiel bezüglich der Hauptebenen 16, 17 beschrieben worden ist. Die Hauptebene des zweiten Befestigungsabschnitts 15' steht rechtwinkelig zu den Hauptebenen 16', 37.

Im Crashfall, wenn die auf das lenkradseitige Ende 2 einwirkende und in Richtung der Längsachse 13 zur Fahrzeugfront gerichtete Kraft (oder diese Komponente der beim Crash auftretenden Kraft) den vorgegebenen Grenzwert überschreitet, reißt der Verbindungsabschnitt 36 entlang der Aufreißlinie 18' ein, wobei sich die Manteleinheit 3 in Richtung zur Fahrzeugfront 3 verschiebt, also auch gegenüber dem ersten Befestigungsabschnitt 14' in Richtung zur Fahrzeugfront verschiebt, vgl. Fig. 10.

Das weitere Tragstück 20 kann in gleicher Weise wie im ersten Ausführungsbeispiel ausgebildet sein. Die Verstellung der Lenksäule in die Längsrichtung 31 wird hierbei durch entsprechende Verformungen des weiteren Tragstücks 20 aufgenommen, wobei jedoch das weitere Tragstück 20 in die ersten Befestigungsstelle 23 und zweiten Befestigungsstelle 22 mit der Manteleinheit 3 verbunden bleibt. Zur Ermöglichung der Verschiebung der zweiten Befestigungsstelle 22 verbiegt sich der zweite Befestigungsabschnitt 30 gegenüber den ersten Befestigungsabschnitten 29. Zur Ermöglichung der Verschiebung der ersten Befestigungsstellen 23 in die Längsrichtung 31 verbiegen sich die Verbindungslaschen 26 gegenüber dem Hauptteil des zweiten Befestigungsabschnitts 30.

Beispielsweise könnte der Spannbolzen 33 auch die Manteleinheit 3 durch mindestens ein in Richtung der Längsrichtung 31 ausgerichtetes Langloch durchsetzen und in den Tragstücken 7' angeordnete Rundlöcher durchsetzen, von deren Rändern er in die Längsrichtung 31 unverschiebbar gehalten ist.

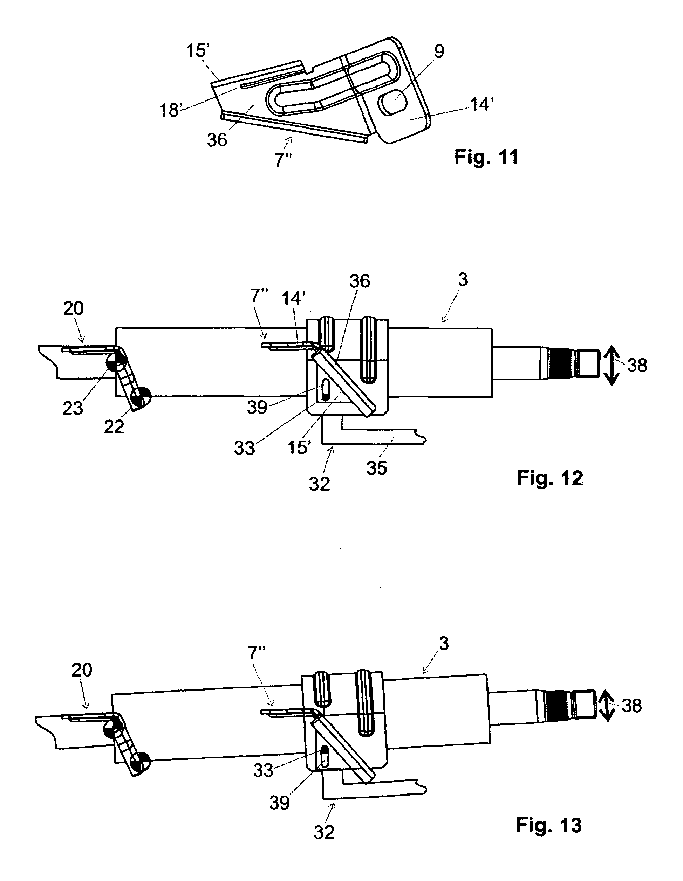

In den Fig. 11 bis 13 ist ein drittes Ausführungsbeispiel dargestellt, das abgesehen von den nachfolgend beschriebenen Unterschieden identisch zum zuvor beschriebenen zweiten Ausführungsbeispiel ist:

Die Lenksäule ist hier in die Richtung 38 der Höhen- bzw. Neigungsverstellung einstellbar ausgebildet.

Der Spannbolzen 33 durchsetzt hierzu in den beidseitig der Manteleinheit 3 angeordneten Tragstücken 7" ausgebildete Langlöcher 39, die sich in Richtung der Höhen- bzw. Neigungsverstellung 38 erstrecken. Weiters durchsetzt der Spannbolzen 33 mindestens ein Loch in der Manteleinheit 3, von dem er in die Richtung 38 unverschiebbar gehalten ist. Auch eine umgekehrte Anordnung (Langloch 39 in der Manteleinheit 3, Rundlöcher in den Tragstücken 7") ist denkbar und möglich.

Im geöffneten Zustand der Feststelleinrichtung 32 ist die Lenksäule in die Richtung der Höhen- bzw. Neigungsverstellung 38 verstellbar, wobei sich das weitere Tragstück 20 entsprechend verformt (Verbiegung des zweiten Befestigungsabschnitts 30 gegenüber den ersten Befestigungsabschnitten 29). Im geschlossenen Zustand der Feststelleinrichtung 32 ist die Höhen- bzw. Neigungseinstellung fixiert.

Das Aufreißen des Verbindungsabschnitts 36 im Crashfall erfolgt in der gleichen Weise wie in den zuvor genannten Ausführungsformen.

In analoger Weise ist eine sowohl in die Längsrichtung 31 als auch in die Richtung 38 der Höhen- bzw. Neigungsverstellung verstellbare Lenksäule ausbildbar. Der Spannbolzen 33 könnte hierbei sich kreuzende Langlöcher in der Manteleinheit 3 und in den Tragstücken durchsetzen, wobei beispielsweise die Langlöcher in der Manteleinheit 3 in Richtung der Längsrichtung 31 und die Langlöcher in den Tragstücken in Richtung der Höhen- bzw. Neigungsverstellung 38 ausgerichtet sein können und auch die umgekehrte Anordnung möglich ist.

Die Manteleinheit 3 kann im Falle einer verstellbar ausgebildeten Lenksäule durch alle bekannten Arten von Klemmsystemen im festgestellten Zustand gegen eine Verstellung gesichert sein. Die Feststellung kann wie bereits erwähnt reibschlüssig und/oder formschlüssig sein. Zur Erhöhung der Anzahl der Reibflächen können in bekannter Weise zusätzliche Lamellen vorgesehen sein. Die formschlüssige Feststellung kann beispielsweise durch Verzahnungen erfolgen. Die Verspannung im festgestellten Zustand kann beispielsweise durch Nockensysteme oder Wälzkörpersysteme erfolgen. Die Ansteuerung der Klemmung kann beispielsweise mechanisch oder elektrisch sein.

Unterschiedliche weitere Modifikationen der gezeigten Ausführungsbeispiele sind denkbar und möglich, ohne den Bereich der Erfindung zu verlassen. Beispielsweise könnten die Tragstücke 7, 8 im ersten Ausführungsbeispiel analog zu den Tragstücken 7', 7" des zweiten und dritten beschriebenen Ausführungsbeispiels ausgebildet sein, wobei die Langlöcher 34, 39 entfallen können, die Ausbildung im Übrigen aber völlig identisch sein könnte (eine Verschweißung oder andere Befestigung zwischen der Manteleinheit 3 und dem jeweiligen Tragstück könnte im Bereich des vertikal ausgerichteten zweiten Befestigungsabschnitts erfolgen, der über den Verbindungsabschnitt mit dem ersten Befestigungsabschnitt verbunden ist). Die mindestens eine Aufreißlinie 18, 18' wäre dann im den ersten und den zweiten Befestigungsabschnitt verbindenden Verbindungsabschnitt 36 ausgebildet.

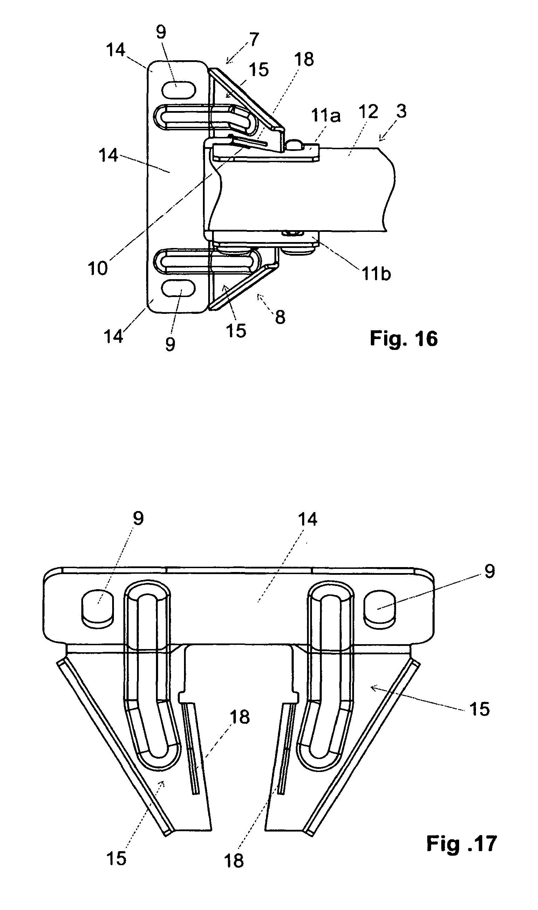

In allen beschriebenen Ausführungsbeispielen könnte anstelle der beiden beschriebenen separaten Tragstücke 7, 8, 7', 7" ein einzelnes Tragstück vorgesehen sein, welches aufbezogen auf eine die Längsachse 13 enthaltende Vertikalebene - gegenüberliegenden Seiten der Manteleinheit 3 angeordnete erste Befestigungsabschnitte aufweist, welche jeweils am karosseriefesten Teil 6 befestigbar sind. Von diesem einzelnen Tragstück wird im Normalbetrieb, also wenn kein Crashfall aufgetreten ist, wiederum zumindest ein Teil des Gewichts der Lenksäule getragen. Entsprechend können im Fall, dass die zwei einzelnen Tragstücke 7, 8, 7', 7", die beidseits der Manteleinheit angeordnet sind aus einem einzigen Teil ausgebildet sind, die beidseits der Manteleinheit 3 anzuordnenden zweiten Befestigungsabschnitte 15 über den ersten Befestigungsabschnitt 14 miteinander verbunden sein, bevorzugt als einteiliges Blechbiege-Stanzteil, wie dies in Fig. 16 und 17 veranschaulicht ist. Weiters könnte dieses Tragstück einen die ersten Befestigungsabschnitte miteinander verbindenden Verbindungsabschnitt aufweisen. Dieser die ersten Befestigungsabschnitte verbindende Verbindungsabschnitt könnte hierbei in ähnlicher Weise wie der in den Fig. 14 und 15 dargestellte zweite Befestigungsabschnitt 30 des weiteren Tragstücks 20 ausgebildet sein, wobei aber in analoger Weise wie bei den Tragstücken 7, 8, 7', 7" ausgebildete Aufreißlinien 18, 18' ausgebildet sein könnten und anstelle der Verbindungslaschen 26 die der Manteleinheit zugewandten Ränder mit der Manteleinheit verschweißt sein könnten bzw. an diesen Rändern über Umbiegungen oder Abwinklungen zweite Befestigungsabschnitte anschließen könnten, welche mit der Manteleinheit 3 fest verbunden oder fest verbindbar sind.

Die Ausbildung von Aufreißlinien 18, 18' könnte beispielsweise auch durch eine eingebrachte Perforation erfolgen.

Unterschiedliche Verläufe von Aufreißlinien 18, 18' sind denkbar und möglich, um ein Aufreißen mit einer Verschiebung der Manteleinheit 3 zu ermöglichen, wobei sich eine herausgerissene Lasche bildet, die einerseits mit der Manteleinheit 3 verbunden ist, andererseits mit einem restlichen Teil des Tragstücks verbunden ist. Beispielsweise könnten nicht nur gerade Aufreißlinien sondern auch gebogene oder zwei oder mehr Abwicklungen aufweisende Aufreißlinien vorgesehen sein.

Auch wenn in den Beispielen das weitere Tragstück 20 stets weiter vom lenkradseitigen Ende 2 der Lenkspindel 1 entfernt angeordnet ist als das erste Tragstück 7, 8, 7', 7", so ist es denkbar und möglich, das erste Tragstück 7, 8, 7', 7" weiter vom lenkradseitigen Ende 2 der Lenkspindel 1 entfernt anzuordnen als das weitere Tragstück 20.
Es ist auch denkbar und möglich, entsprechende Aufreißbereiche insbesondere entsprechende Aufreißlinien in der Manteleinheit 3 selbst anzuordnen. Das mindestens eine Tragstück ist in diesem Fall mit einem Teil der Manteleinheit, das von den übrigen Teilen der Manteleinheit durch einen Aufreißbereich getrennt angeordnet ist, verbunden. Im Crashfall wird entsprechend der Aufreißbereich aufgetrennt und die Manteleinheit verschiebt sich gegenüber dem Tragstück und dem mit dem Tragstück verbundenem Teil der Manteleinheit. Eine derartige technische Lösung ist ebenfalls mit der Erfindung umfasst.

**Legende zu den Hinweisziffern:**

| | | | |
|---|---|---|---|
| 1 | Lenkspindel | 26 | Verbindungslasche |
| 1a, 1b, 1c | Abschnitt | 27 | Schweißpunkt |
| 2 | lenkradseitiges Ende | 28 | Aufreißlinie |
| 3 | Manteleinheit | 29 | erster Befestigungsabschnitt |
| 4 | Kardangelenk | 30 | zweiter Befestigungsabschnitt |
| 5 | Kardangelenk | 31 | Längsrichtung |
| 6 | karosseriefestes Teil | 32 | Feststelleinrichtung |
| 7, 7', 7" | Tragstück | 33 | Spannbolzen |
| 8 | Tragstück | 34 | Langloch |
| 9 | Bohrung | 35 | Betätigungshebel |
| 10 | Schweißnaht | 36 | Verbindungsabschnitt |
| 11 | Verbindungsbügel | 37 | Hauptebene |
| 11a, 11b | Seitenwange | 38 | Richtung der Höhenverstellung |
| 12 | Rohrteil | 39 | Langloch |
| 13 | Längsachse | 40 | Hauptebene |
| 14, 14' | erster Befestigungsabschnitt | 41 | Hauptebene |
| 15, 15' | zweiter Befestigungsabschnitt | | |
| 15a | Umbördelung | | |
| 15b | Anbindungsabschnitt | | |
| 15c | Basisbereich | | |
| 15d | Verbindungsbereich | | |
| 16, 16' | Hauptebene | | |
| 17 | Hauptebene | | |
| 18, 18' | Aufreißlinie | | |
| 19 | Zunge | | |
| 20 | Tragstück | | |
| 21 | karosseriefestes Teil | | |
| 22 | zweite Befestigungsstelle | | |
| 23 | erste Befestigungsstelle | | |
| 24 | Bohrung | | |
| 25 | Bohrung | | |

## Patentansprüche

1. Lenksäule für ein Kraftfahrzeug, umfassend eine Manteleinheit (3), von der ein an ein lenkradseitiges Ende (2) anschließender Abschnitt (1a) einer Lenkspindel (1) drehbar gelagert ist, und mindestens ein Tragstück (7, 7', 7", 8, 20), welches einerseits an einem karosseriefesten Teil (6, 21) des Kraftfahrzeugs befestigbar ist und welches andererseits mit der Manteleinheit (3) fest verbunden oder fest verbindbar ist, wobei zumindest ein Aufreißbereich (18, 18', 23, 27, 28) ausgebildet ist, entlang dem bei Einwirken einer Verschiebekraft in Richtung der Längsachse (13) des an das lenkradseitige Ende (2) anschließenden Abschnitts (1a) der Lenkspindel (1), die eine vordefinierte Lösekraft überschreitet, die Verbindung des Tragstücks (7, 7', 7", 8, 20) mit der Manteleinheit (3) oder das Tragstück (7, 7', 7", 8, 20) aufreißbar ist, wobei es zu einer Verschiebung der Manteleinheit (3) gegenüber dem karosseriefesten Teil (6, 21) kommt und wobei das Aufreißen des Aufreißbereiches (18, 18', 23, 27, 28) zumindest über einen Großteil des Verschiebeweges der Manteleinheit gegenüber dem karosseriefesten Teil kontinuierlich erfolgt, **dadurch gekennzeichnet, dass** im Normalbetrieb, in welchem in Richtung der Längsachse (13) des an das lenkradseitige Ende (2) anschließenden Abschnittes (1a) der Lenkspindel (1) keine Verschiebekraft einwirkt, die die vordefinierte Lösekraft überschreitet, der Aufreißbereich (18, 18', 23, 27, 28) unmittelbar im Kraftfluss zwischen dem karosseriefesten Teil (6, 21) des Kraftfahrzeuges und der Manteleinheit (3) zur Aufnahme der Haltekräfte der Manteleinheit liegt.

2. Lenksäule nach Anspruch 1, **dadurch gekennzeichnet, dass** die Manteleinheit (3) unter Zwischenschaltung des Tragstücks (7, 7', 7", 8, 20) mit dem karosseriefesten Teil (6, 21), zumindest bis zur Einwirkung einer Verschiebekraft, deren Wert eine vordefinierte Losbrechkraft überschreitet, die höher als die Lösekraft ist, verbunden bleibt.

3. Lenksäule nach Anspruch 1 oder 2, **dadurch gekennzeichnet, dass** der Aufreißbereich durch eine Aufreißlinie (18, 18', 28) im Tragstück (7, 7', 7", 8, 20) gebildet ist.

4. Lenksäule nach einem der Ansprüche 1 bis 3, **dadurch gekennzeichnet, dass** der Aufreißbereich durch eine auftrennbare Befestigung der Manteleinheit (3) am Tragstück (7, 7', 7", 8, 20) gebildet ist.

5. Lenksäule nach einem der vorhergehenden Ansprüche , **dadurch gekennzeichnet, dass** das Tragstück (7, 7', 7", 8, 20) mindestens einen ersten Befestigungsabschnitt (14, 14', 29), der am karosseriefesten Teil (6, 21) befestigbar ist, und mindestens einen zweiten Befestigungsabschnitt (15, 15', 26, 30) aufweist, der an der Manteleinheit (3) festgelegt ist oder mit der Manteleinheit (3) fest verbindbar ist.

6. Lenksäule nach Anspruch 5, **dadurch gekennzeichnet, dass** der zweite Befestigungsabschnitt (15, 26) oder ein den ersten Befestigungsabschnitt (14') und den zweiten Befestigungsabschnitt (15') miteinander verbindender Verbindungsabschnitt (36, 30) die Aufreißlinie (18, 18', 28) oder mindestens eine der Aufreißlinien (18, 18', 28) aufweist.

7. Lenksäule nach Anspruch 5 oder 6, **dadurch gekennzeichnet, dass** der erste Befestigungsabschnitt (14, 14', 29) und der die mindestens eine Aufreißlinie (18, 18', 28) aufweisende Abschnitt (15, 36, 26) jeweils eine Hauptebene (16, 16'; 17, 37, 40) aufweisen, die winkelig zueinander stehen.

8. Lenksäule nach Anspruch 6 oder 7, **dadurch gekennzeichnet, dass** im Falle der Verbindung des ersten Befestigungsabschnitts (14') mit dem zweiten Befestigungsabschnitt (15') über einen Verbindungsabschnitt (36) der zweite Befestigungsabschnitt (15') eine Hauptebene aufweist, die rechtwinkelig zu den Hauptebenen (16', 37) des ersten Befestigungsabschnitts (14') und des Verbindungsabschnitts (36) steht.

9. Lenksäule nach einem der Ansprüche 5 bis 8, **dadurch gekennzeichnet, dass** der erste Befestigungsabschnitt (14, 14', 29) mindestens eine Bohrung (9, 24, 25) zur Befestigung des Tragstücks (7, 7', 7", 8, 20) am karosseriefesten Teil (6) mittels einer Befestigungsschraube aufweist.

10. Lenksäule nach einem der Ansprüche 1 bis 9, **dadurch gekennzeichnet, dass** das Tragstück bzw. ein jeweiliges Tragstück (7, 7', 7", 8, 20) insgesamt einstückig ausgebildet ist.

11. Lenksäule nach einem der Ansprüche 3 bis 10, **dadurch gekennzeichnet, dass** die Aufreißlinie (18, 18', 28) durch eine linienförmige Einkerbung ausgebildet ist.

12. Lenksäule nach einem der Ansprüche 3 bis 11, **dadurch gekennzeichnet, dass** auf gegenüberliegenden Seiten der Manteleinheit (3) jeweils zumindest eine Aufreißlinie (18, 18', 28) in separaten, auf gegenüberliegenden Seiten der Manteleinheit (3) angeordneten Tragstücken (7, 7', 7") oder in einem sich auf gegenüberliegende Seiten der Manteleinheit (3) erstreckenden Tragstück (7, 20) ausgebildet sind, entlang derer im Falle eines Fahrzeugcrashes die Tragstücke (7, 7', 7", 8, 20) aufreißbar sind bzw. das Tragstück aufreißbar ist.

13. Lenksäule nach einem der vorhergehenden Ansprüche , **dadurch gekennzeichnet, dass** in einem gegenüber dem mindestens einen Tragstück (7, 7', 7", 8) weiter vom lenkradseitigen Ende (2) entfernten Bereich der Lenksäule mindestens ein weiteres Tragstück (20) vorgesehen ist, welches einerseits an einem karosseriefesten Teil (21) des Kraftfahrzeuges befestigbar ist, andererseits an einem Teil der Lenksäule, vorzugsweise der Manteleinheit (3), befestigt ist.

14. Lenksäule nach Anspruch 13, **dadurch gekennzeichnet, dass** sich zumindest eines der Tragstücke (7, 7', 7", 8, 20), vorzugsweise zumindest das mindestens eine weiter vom lenkradseitigen Ende (2) entfernt gelegene weitere Tragstück (20), bei einer Verschiebung der Manteleinheit (3) gegenüber dem karosseriefesten Teil (6, 21) verformt.

15. Lenksäule nach Anspruch 14, **dadurch gekennzeichnet, dass** mindestens ein sich bei einer Verschiebung der Manteleinheit (3) gegenüber dem karosseriefesten Teils (6, 21) verformendes Tragstück (20) über mindestens eine erste Befestigungsstelle (23) und mindestens eine zweite Befestigungsstelle (22) mit dem Teil der Lenksäule verbunden ist, wobei sich im Falle eines Fahrzeugerashes mindestens eine dieser ersten Befestigungsstellen (23) nach Einwirkung einer Verschiebekraft, die eine vordefinierten Lösekraft überschreitet, löst und mindestens eine dieser zweiten Befestigungsstellen (22) zumindest bis zur Einwirkung einer Verschiebekraft, deren Wert eine vordefinierte Losbrechkraft überschreitet, die größer als die Lösekraft ist, bestehen bleibt.

## Claims

1. A steering column for a motor vehicle, comprising a casing unit (3) by which a portion (1a), adjoining an end (2) at the steering wheel side, of a steering spindle (1) is rotatably mounted and at least one supporting piece (7, 7', 7", 8, 20) which is on the one hand securable to a part (6, 21), fixed to the bodywork, of the motor vehicle and is on the other hand securely connected or securely connectable to the casing unit (3), wherein at least one tear region (18, 18', 23, 27, 28) is formed along which upon action of a displacement force, exceeding a pre-defined detachment force, in the direction of the longitudinal axis (13) of the portion (1a), adjoining the end (2) at the steering wheel side, of the steering spindle (1), the connection of the supporting piece (7, 7', 7", 8, 20) to the casing unit (3) or the supporting piece (7, 7', 7", 8, 20) can be torn open, wherein there is a displacement of the casing unit (3) with respect to the part (6, 21) fixed to the bodywork and wherein the tearing of the tear region (18, 18', 23, 27, 28) takes place continuously at least over a majority of the displacement path of the casing unit with respect to the part fixed to the bodywork, **characterised in that** in normal operation, in which no displacement force exceeding the predetermined detachment force acts in the direction of the longitudinal axis (13) of the portion (1a), adjoining the end (2) at the steering wheel side, of the steering spindle (1), the tear region (18, 18', 23, 27, 28) lies directly in the force flow between the part (6, 21), of the motor vehicle, fixed to the bodywork and the casing unit (3) in order to receive the holding forces of the casing unit.

2. A steering column according to claim 1, **characterised in that** at least till the action of a displacement force whose value exceeds a predefined break-away force higher than the detachment force, the casing unit (3) remains connected to the part (6, 21), fixed to the bodywork, with the interpositioning of the supporting piece (7, 7', 7", 8, 20).

3. A steering column according to claim 1 or 2, **characterised in that** the tear region is formed by a tear line (18, 18' 28) in the supporting piece (7, 7', 7", 8, 20).

4. A steering column according to any one of claims 1 to 3, **characterised in that** the tear region is formed by a severable securing of the casing unit (3) to the supporting piece (7, 7', 7", 8, 20).

5. A steering column according to any one of the preceding claims, **characterised in that** the supporting piece (7, 7', 7", 8, 20) has at least one first securing portion (14, 14', 29) securable to the part (6, 21) fixed to the bodywork and at least one second securing portion (15, 15', 26, 30) made fast on the casing unit (3) or securely connectable to the casing unit (3).

6. A steering column according to claim 5, **characterised in that** the second securing portion (15, 26) or a connecting portion (36, 30) connecting the first securing portion (14') and the second securing portion (15') to one another has the tear line (18, 18', 28) or at least one of the tear lines (18, 18', 28).

7. A steering column according to claim 5 or 6, **characterised in that** the first securing portion (14, 14', 29) and the portion (15, 36, 26) having the at least one tear line (18, 18', 28) each have a main plane (16, 16'; 17, 37, 40) which are at an angle to one another.

8. A steering column according to claim 6 or 7, **characterised in that** in the event of the connection of the first securing portion (14') to the second securing portion (15') via a connecting portion (36), the second securing portion (15') has a main plane at right angles to the main planes (16', 37) of the first securing portion (14') and the connecting portion (36).

9. A steering column according to any one of claims 5 to 8, **characterised in that** the first securing portion (14, 14', 29) has at least one bore (9, 24, 25) to secure the supporting piece (7, 7', 7", 8, 20) to the part (6), fixed to the bodywork, by means of a securing screw.

10. A steering column according to any one of claims 1 to 9, **characterised in that** the supporting piece or a particular supporting piece (7, 7', 7", 8, 20) is in one piece as a whole.

11. A steering column according to any one of claims 3 to 10, **characterised in that** the tear line (18, 18', 28) is formed by a linear indentation.

12. A steering column according to any one of claims 3 to 11, **characterised in that** on facing sides of the casing unit (3) there is in each case at least one tear line (18, 18', 28) in separate supporting pieces (7, 7', 7")' arranged on facing sides of the casing unit (3) or in a supporting piece (7, 20) extending on facing sides of the casing unit (3), along which in the event of a vehicle crash the supporting pieces (7, 7', 7", 8, 20) can be tom or the supporting part can be torn.

13. A steering column according to any one of the preceding claims, **characterised in that** in a steering-column region located more distant from the end (2) at the steering wheel side as compared with the at least one supporting piece (7, 7', 7", 8) there is provided at least one further supporting piece (20) which on the one hand is securable to a part (21), fixed to the bodywork, of the motor vehicle and on the other hand is secured to a part of the steering column, preferably the casing unit (3).

14. A steering column according to claim 13, **characterised in that** at least one of the supporting pieces (7, 7', 7", 8, 20), preferably at least the at least one further supporting piece (20) located more distant from the end (2) at the steering wheel side, deforms upon displacement of the casing unit (3) with respect to the part (6, 21) fixed to the bodywork.

15. A steering column according to claim 14, **characterised in that** at least one supporting piece (20) deforming upon displacement of the casing unit (3) with respect to the part (6, 21) fixed to the bodywork is connected to the part of the steering column via at least one first securing site (23) and at least one second securing site (22), wherein in the event of a vehicle crash, at least one of these first securing sites (23) detaches after action of a displacement force exceeding a predefined detachment force and at least one of these second securing sites (22) remains at least till action of a displacement force whose value exceeds a pre-defined breakaway force which is greater than the detachment force.

## Revendications

1. Colonne de direction pour un véhicule automobile, comprenant une unité de gainage (3), laquelle loge de manière à pouvoir tourner une section (1a), se raccordant à une extrémité (2) côté volant de direction, d'un arbre de direction (1) et comprenant au moins une pièce de support (7, 7', 7", 8, 20), qui peut être fixée d'une part à une partie (6, 21), solidaire de la carrosserie, du véhicule automobile et qui est reliée ou peut être reliée de manière fixe d'autre part à l'unité de gainage (3), au moins une zone de déchirement (18, 18', 23, 27, 28) étant réalisée, le long de laquelle la liaison entre la pièce de support (7, 7', 7", 8, 20) et l'unité de gainage (3) ou la pièce de support (7, 7', 7", 8, 20) peut être déchirée lorsqu'une force de déplacement agit en direction de l'axe longitudinal (13) de la section (1a), se raccordant à l'extrémité (2) côté volant de direction, de l'arbre de direction (1), laquelle force de déplacement dépasse une force de déclenchement prédéfinie, un déplacement de l'unité de gainage (3) par rapport à la partie (6, 21) solidaire de la carrosserie étant obtenu et la zone de déchirement (18, 18', 23, 27, 28) étant déchirée en continu au moins sur une grande partie du trajet de déplacement de l'unité de gainage par rapport à la partie solidaire de la carrosserie, **caractérisée en ce qu'**en fonctionnement normal, lors duquel aucune force de déplacement n'agit en direction de l'axe longitudinal (13) de la section (1a), se raccordant à l'extrémité (2) côté volant de direction, de l'arbre de direction (1), laquelle force de déplacement dépasse la force de déclenchement prédéfinie, la zone de déchirement (18, 18', 23, 27, 28) se trouve dans le flux de force entre la partie (6, 21) du véhicule automobile solidaire de la carrosserie et l'unité de gainage (3) servant à absorber les forces de retenue de l'unité de gainage.

2. Colonne de direction selon la revendication 1, **caractérisée en ce que** l'unité de gainage (3) reste reliée à la partie (6, 21) solidaire de la carrosserie, lorsque la pièce de support (7, 7', 7", 8, 20) est intercalée, au moins jusqu'à l'action d'une force de déplacement, dont la valeur dépasse une force de décollement prédéfinie, laquelle est supérieure à la force de déclenchement.

3. Colonne de direction selon la revendication 1 ou 2, **caractérisée en ce que** la zone de déchirement est formée par une ligne de déchirement (18, 18', 28) dans la pièce de support (7, 7', 7", 8, 20).

4. Colonne de direction selon la revendication 1 à 3, **caractérisée en ce que** la zone de déchirement est formée par une fixation détachable de l'unité de gainage (3) au niveau de la pièce de support (7, 7', 7", 8, 20).

5. Colonne de direction selon l'une quelconque des revendications précédentes, **caractérisée en ce que** la pièce de support (7, 7', 7" , 8, 20) présente au moins une première section de fixation (14, 14', 29) pouvant être fixée au niveau de la partie (6, 21) solidaire de la carrosserie, et au moins une deuxième section de fixation (15, 15', 26, 30) pouvant être fixée à l'unité de gainage (3) ou pouvant être reliée de manière fixe à l'unité de gainage (3).

6. Colonne de direction selon la revendication 5, **caractérisée en ce que** la deuxième section de fixation (15, 26) ou une section de liaison (36, 30) reliant entre elles la première section de fixation (14') et la deuxième section de fixation (15') présentent la ligne de déchirement (18, 18', 28) ou au moins une des lignes de déchirement (18, 18', 28).

7. Colonne de direction selon la revendication 5 ou 6, **caractérisée en ce que** la première section de fixation (14, 14', 29) et la section (15, 36, 26) présentant la ligne de déchirement (18, 18', 28) au moins au nombre de une présentent respectivement un plan principal (16, 16' ; 17, 37, 40), lesquels sont situés l'un par rapport à l'autre de manière à former un angle.

8. Colonne de direction selon la revendication 6 ou 7, **caractérisée en ce que** dans le cas d'une liaison entre la première section de fixation (14') et la deuxième section de fixation (15') par l'intermédiaire d'une section de liaison (36), la deuxième section de fixation (15') présente un plan principal, qui est perpendiculaire par rapport aux plans principaux (16', 37) de la première section de fixation (14') et de la section de liaison (36).

9. Colonne de direction selon l'une quelconque des revendications 5 à 8, **caractérisée en ce que** la première section de fixation (14, 14', 29) présente au moins un alésage (9, 24, 25) aux fins de la fixation de la pièce de support (7, 7', 7" , 8, 20) au niveau de la partie (6) solidaire de la carrosserie au moyen d'une vis de fixation.

10. Colonne de direction selon l'une quelconque des revendications 1 à 9, **caractérisée en ce que** la pièce de support ou une pièce de support respective (7, 7', 7 " , 8, 20) est réalisée globalement d'un seul tenant.

11. Colonne de direction selon l'une quelconque des revendications 3 à 10, **caractérisée en ce que** la ligne de déchirement (18, 18', 28) est réalisée par une entaille en forme de ligne.

12. Colonne de direction selon l'une quelconque des revendications 3 à 11, **caractérisée en ce qu'**est réalisée sur des côtés opposés de l'unité de gainage (3) respectivement au moins une ligne de déchirement (18, 18', 28) dans des pièces de support (7, 7', 7") séparées, disposées sur des côtés opposés de l'unité de gainage (3) ou dans une pièce de support (7, 20) s'étendant sur des côtés opposés de l'unité de gainage (3), le long de laquelle ligne de déchirement, les pièces de support (7, 7', 7", 8, 20) peuvent être déchirées ou la pièce de support peut être déchirée dans le cas d'une collision de véhicule.

13. Colonne de direction selon l'une quelconque des revendications précédentes, **caractérisée en ce qu'**est prévue dans une zone, éloignée de l'extrémité (2) coté volant de direction par rapport à la pièce de support (7, 7', 7", 8) au moins au nombre de une, au moins une autre pièce de support (20), qui peut être fixée d'un côté au niveau de la pièce (21), solidaire de la carrosserie, du véhicule automobile et qui est d'un autre côté fixée à une partie de la colonne de direction, de préférence de l'unité de gainage (3).

14. Colonne de direction selon la revendication 13, **caractérisée en ce qu'**au moins une des pièces de support (7, 7', 7" , 8, 20), de préférence au moins l'autre pièce de support (20) au moins au nombre de une placée de manière éloignée de l'extrémité (2) côté volant de direction, se déforme lors d'un déplacement de l'unité de gainage (3) par rapport à la partie (6, 21) solidaire de la carrosserie.

15. Colonne de direction selon la revendication 14, **caractérisée en ce qu'**au moins une pièce de support (20) se déformant lors d'un déplacement de l'unité de gainage (3) par rapport à la partie (6, 21) solidaire de la carrosserie est reliée à la partie de la colonne de direction par l'intermédiaire d'au moins un premier endroit de fixation (23) et par l'intermédiaire d'au moins un deuxième endroit de fixation (22), au moins un desdits premiers endroits de fixation (23) se déclenchant, dans le cas d'une collision de véhicule, sous l'effet d'une force de déplacement, qui dépasse une force de déclenchement prédéfinie, et au moins un desdits deuxièmes endroits de fixation (22) demeurant au moins jusqu'à l'action d'une force de déplacement, dont la valeur dépasse une force de décollement prédéfinie, qui est supérieure à la force de déclenchement.
